# EUROPEAN PATENT APPLICATION

(11) **EP 3 208 251 A1**
(43) Date of publication of application: **23.08.2017**
(21) Application number: 16156053.7
(22) Date of filing: 17.02.2016
(51) Int. Cl.: C04B 33/00, C04B 33/13, C04B 35/01, C04B 35/622, C04B 35/626, C04B 41/00, C04B 41/50, C04B 103/54

(54) **ENGOBES FOR COATING CLAY TILES**

(71) Applicant: CREATON POLSKA sp.z.o.o., 32-300 Olkusz (PL)
(72) Inventor: IZAK, Piotr, 31-303 Kraków (PL); GAJEK, Marcin, 31-315 Kraków (PL); WÓJCIK, Lukasz, 41-902 Bytom (PL); RÓZALSKI, Adam, 32-080 Zabierzów (PL)
(74) Representative: Van Steenlandt, Wim August Maria

(57) **Abstract**

An engobe for coating clay tiles comprises an aqueous dispersion of clay particles, wherein at least 95%w of the solid particles has a particle size of less than 40 µm, these solids having a BET specific surface in the range of 20 to 50 m²/g

## Description

### Field of the invention

The present invention relates to engobes for coating clay tiles, methods to provide such engobes, the use of these engobes for coating clay tiles, and clay tiles coated with such engobes.

### Background of the invention

Engobes used to provide a coating on tiles are known. Clay particles are provided in an aqueous medium, together with pigments and optionally some frit. This aqueous dispersion, called engobe, is applied to dried clay tiles, which are fired or burned to both cure the clay, as well as to sinter the engobe providing an optionally colored coating, with optionally some degree of gloss, to the finished tile. The sintered coating provides resistance to weathering conditions, limit or even prevent water being absorbed or even passing through the tile.
A known problem of such engobes is the sensitivity to color differences because of differences in the firing and burning process. Small fluctuations of the temperature regime may influence the color obtained. Also known is the occurrence of cracks in the coating layer, probably due to differences in thermal expansion between the engobe during or after sintering, and the body of the tile.
Such cracks may facilitate the growth of moss, in particularly in high humid environments.

### Summary of the invention

Though it is not understood exactly why, surprisingly it was found that an engobes with extremely fine particles of clay, show less to none of these drawbacks. The engobes according to the invention may be applied as finer layers, which cause a more efficient use of raw material.

According to a first aspect of the invention, an engobe for coating clay tiles is provided. The engobe, comprises an aqueous dispersion of clay particles, wherein at least 95%w of said solid particles has a particle size of less than 40 µm, these solid particles having a BET specific surface in the range of 20 to 50 m²/g. The %w is expressed as the weight of the solid particles having the specified particle size, over the total dry mass of the engobe.

More preferred the solid particles or "solids" of this first part have a BET specific surface in the range of 33 to 37 m²/g.

According to some embodiments, the at least 99%w of the solid particles may have a particle size of less than 40 µm.

The engobe according to the invention may comprise, next to clay, one or more solid components selected from the group consisting of feldspar (e.g. feldspar originating from melaphyre), pigments and frit.
The engobe may also further comprise other additives.

According to some embodiments, the engobe may comprise from 100 to 10 %w of clay. The solids in the engobe may comprise from 99.9 to 10 %w, more preferred less than 99%w, even less than 80%w, and more than 20 %w.

According to some embodiments, the engobe further may comprise 0 to 90 %w of feldspar. More preferred, the solids in the engobe may comprise 10 to 90 %w of feldspar, e.g. less than 90%w of feldspar, even less than 80%w, and more than 10%w, even more than 20 %w.

According to some embodiments, the engobe further may comprise 0 to 90 %w of frit. More preferred, the solids in the engobe may comprise 10 to 90 %w of frit, e.g. less than 90%w of feldspar, even less than 80%w, and more than 10%w, even more than 20 %w. Preferably low temperature frit, such as high Boron-frit is used.

According to some embodiments, the engobe further may comprise 0.1 to 40 %w of pigments.

It is understood that this frit, feldspar and/or the pigments are present as particles in the same aqueous dispersion.

According to some embodiments, the engobe may have a density in the range of 1.01 to 1.7 g/cm³. Preferably the engobe may have a density in the range of 1.05 to 1.7 g/cm³, such as in the range of 1.1 to 1.55 g/cm³, most preferably in the range of 1.2 to 1.5 g/cm³.

Preferably the engobe may have a Ford cup flow time in the range of 7 to 16 seconds. Preferably the engobe may have a Ford cup flow time in the range of 8 to 15 seconds, most preferably in the range of 10 to 13 seconds.

Such engobes have the advantage that they can be used to provide extremely thin engobe layers on dried, unfired clay tiles (also referred to as unburned or dried clay tiles), applied by e.g. spraying. Firing at lower temperatures can be applied, e.g. less than 1100°C. The layer applied can be much thinner as presently typically applied. The contact between the engobe layer and the tile surface is more intimate, resulting in a significantly better adhesion of the engobe layer, and leading to a reduced tendency to show micro cracks.

According to a second aspect of the invention, a method to provide an engobe suitable for coating a clay tile is provided. The method comprises the subsequent steps of
- Providing solid particles comprising a clay and optionally one or more other solid particles selected from the group consisting of pigment, frit and feldspar;
- Adding water to said solid particles to provide a first aqueous dispersion having a density in the range of 1.25 to 2.0 g/cm³;
- Milling said first aqueous dispersion such that less than 5%w of the solid particles of said first aqueous dispersion is retained by a sieve with finesse of 40 µm ;
- Adding water to said first aqueous dispersion to provide a diluted first aqueous dispersion with density in the range of 1.2 to 1.7 g/cm;
- Separate said diluted first aqueous dispersion in a first and a second part, wherein the first part is a second aqueous dispersion having a density in the range of 1.01 to 1.5 g/cm³, less than 5%w of this second aqueous dispersion is retained by a sieve with finesse of 40 µm, the solid particles in said second aqueous dispersion have a BET specific surface in the range of 20 to 50 m²/g , this second aqueous dispersion providing the engobe.

More preferred, the second dispersion obtained may have a density in the range of 1.01 to 1.3 g/cm³.

More preferred, less than 2.5%w of said second aqueous dispersion may be retained by a sieve with finesse of 40 µm, even less than 1 %w of said second aqueous dispersion may be retained by a sieve with finesse of 40 µm.

Preferably water is added prior to milling to get a first aqueous dispersion with a density in the range of 1.25 to 2.0, such as of about 1.65 g/cm³. After the first milling step, water is preferably added to provide a density in the range of 1.2 to 1.7, such as in the range of 1.32 to 1.35 g/cm³. During the separation of the first aqueous dispersion, a part of the largest solid particles of the first aqueous dispersion, are removed from the first aqueous dispersion, such that an aqueous dispersion with density in the range of 1.01 to 1.5 g/cm³, e.g. in the range of 1.01 to 1.3 g/cm³, such as in the range of 1.1 to 1.25 g/cm³ , e.g. 1.11 g/cm³ is obtained.

According to some embodiments, the pigments may be present in the first aqueous dispersion. The amount of pigments may vary, but is typically in the range of 0,01 to 15 %w.

According to some embodiments, frit may be present in the first aqueous dispersion. The amount of frit added may vary, but is typically in the range of 0,01 to 90 %w.

According to some embodiments, feldspar may be present in the first aqueous dispersion. The amount of feldspar may vary , but is typically in the range of 0,1 to 90 %w.

According to some embodiments, the method further may comprise the subsequent steps of
- Add solid particles selected from the group consisting of frit, feldspar and pigments to said second aqueous dispersion;
- Milling said second aqueous dispersion such that less than 5%w of the solid particles of said second aqueous dispersion is retained by a sieve with finesse of 40 µm, wherein this milled second aqueous dispersion providing the engobe.

Preferably, the milling of this second aqueous dispersion may be done such that less than 2.5%w, or even less than 1%w of the solid particles of said second aqueous dispersion is retained by a sieve with finesse of 40 µm.

According to some embodiments, pigments may be added to the second aqueous dispersion. The amount of pigments added may vary , but is typically in the range of 0.1 to 40 %w.

According to some embodiments, frit may be added to the second aqueous dispersion. The amount of frit added may vary, but is typically in the range of 0,01 to 90 %w.

According to some embodiments, feldspar may be added to the second aqueous dispersion.

After having added e.g. the frit and/or pigments, to provide the second aqueous dispersion, this second aqueous dispersion is milled in a second milling step, thereby providing a density typically in the range of 1.2 to 1.7 g/cm³ to the aqueous dispersion. This aqueous dispersion is an engobe fit for being applied to clay tiles.
These engobes for coating a clay tile hence may be engobes according to the first aspect of the invention.

The second part obtained from separation of the aqueous dispersion comprises the larger clay particles and may typically be used in the production of the clay tile itself.

According to some embodiments, separation step may be done by centrifugation.

According to some embodiments, the first aqueous dispersion further may comprise a dispersant. Any dispersant suitable to disperse sold particles, such as clay particles, may be used. Preferably Reotan LA is used. The amount of dispersion used typically is in the range of 0.1 to 1.0 %w, more preferred in the range of 0.2 to 0.5%w, %w based upon the total weight of the dispersion.

According to some embodiments, the engobe may have a density in the range of 1.2 to 1.5 g/cm³. Preferably the engobe may have a density in the range of 1.25 to 1.4 g/cm³, most preferably in the range of 1.3 to 1.35 g/cm³.

According to some embodiments, the first aqueous dispersion further may comprise a flux modifier. Reotan LA may be used as flux modifier as well.

According to some embodiments, the first aqueous dispersion further may comprise a stabilizer. This stabilizer may be e.g. carboxymethylcellulose (CMC), in an amount in the range of 0.05 to 1.0 %w based upon the total weight of the dispersion.

According to a third aspect of the invention, an engobe according to the first aspect of the invention, or an engobe obtainable by a method according to the second aspect of the invention is used for producing clay tiles, wherein an unfired clay tile is provided with a layer of said engobe, after which the coated clay tile is fired.

According to some embodiments, the engobe may be applied to the unfired clay tile in an amount of 0.015 to 0.04 g/m². The engobe may preferably applied to the unfired clay tile in an amount of 0.02 to 0.03 g/m².

According to some embodiments, the engobe may be applied to the unfired clay tile by spraying or by means of rotating discs.

According to a fourth aspect of the invention, a clay tile is provided, which clay tile comprises an engobe layer according to the first aspect of the invention, or an engobe obtainable according to a method according to the second aspect of the present invention.

According to some embodiments, the engobe layer may have an average thickness less than 40 µm. Preferably the engobe layer may have an average thickness less than 25 µm.

According to some embodiments, the engobe layer may have a maximum thickness of 40 µm or less. Preferably the engobe layer may have a maximum thickness of 25 µm or less.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematically view of the process to make a tile according to the invention.
Figure 2 is a schematically view of a cross section of a tile obtained according to the invention.

The same reference signs refer to the same, similar or analogous elements in the different figures.

### Description of illustrative embodiments

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.
Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention.
unless other wise indicated, when reference is made to weight % or %w of an element or component, this is to be understood as the ratio, expressed as percentage, of the weight of the element or component, over the weight of the dry mass of the product in which this element or component is present at that instance.
Unless otherwise indicated, a BET specific surface is measured using the ASAP 2010 Accelerated Surface Area and Porosimetry System of Micromeritics.

Unless otherwise indicated, grain size distributions are measured in water suspension, using the Sedigraph 5100 of Micromeritics.

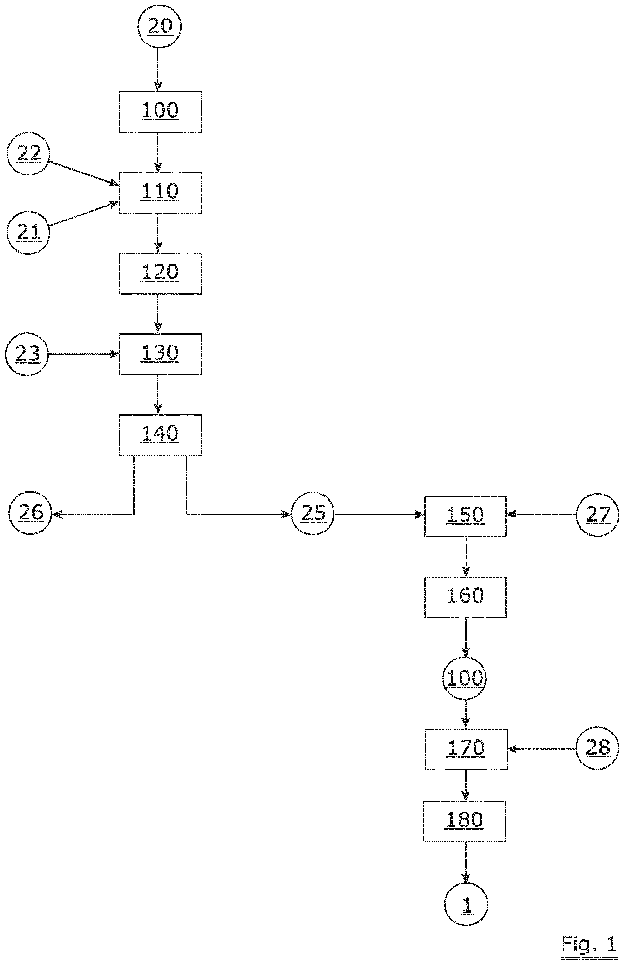

According to a first aspect of the invention, an engobe is prepared. A schematically view of the process is shown in figure 1.

For the first embodiment, in a first step 100, a clay 20 type Baranòw clay is provided.

In a second step 110, water 21 is added to this clay such that a density of 1.65 g/cm³ is reached. Further additives 22 as set out in table I under are added to the dispersion.

**Table I**

| product | %w° |
|---|---|
| Baranòw clay | 16.18 |
| T 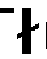 umaczòw melaphyre | 43.76 |
| CMC | 0.18 |
| Reotan LA | 0.30 |
| water | 39.57 |

| | |
|---|---|
| ° based upon total weight of the first dispersion | |

In a third step 120, the first aqueous dispersion is milled in a first milling step by means of an alumina ball mill.

The aqueous dispersion is milled until less than 0.25%w of the dry mass of the aqueous dispersion is retained by a sieve with finesse of 40µm.

In a next step 130, additional water 23 is added to the aqueous dispersion, until the density of the diluted aqueous dispersion is in the range of 1.32 and 1.35 g/cm³.

The diluted aqueous dispersion is now separated in a first part 25 and a second part 26 in step 140. To separate these fractions, a centrifugation step is applied using a centrifuge.

The first part 25, comprising the lighter weight particles, is referred to as the second aqueous dispersion, this dispersion having a density in the range of 1.10 to 1.15 g/cm³. This part will be used for the provision of an engobe according to the invention. The second part 26, comprising a.o. the coarser particles, may be used as slab and is recycled to the production of the clay tiles itself. The solids of this first part have a BET specific surface in the range of 33 to 37 m²/g, and 90 to 95%w (expressed as %w over the total dry mass of the second dispersion) has a particle size of less than 1µm.

In step 150, further additives 27 such as frit is added as set out in table II.

**Table II**

| product | %w° |
|---|---|
| First part 25 | 86.10 |
| Frit FX300 | 11.46 |
| Pigment DP759 | 1.60 |
| Pigment 3205 | 0.80 |

| | |
|---|---|
| ° based upon total weight of the second dispersion FX300 is obtainable from Reidt GmbH & Co. KG , Germany; DP759 is obtainable from PPH standard Sp. z o.o., Poland; Pigment 3205 is obtainable from Zak 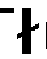 ady Chemiczne Permedia S.A., Poland. | |

In the next step 160, the second aqueous dispersion further comprising frit and pigments, is now milled in a second milling step by means of alumina ball mill.

The second aqueous dispersion is milled until less than 1%w of the dry mass of the second aqueous dispersion is retained by a sieve with finesse of 40µm.

The density of the milled second aqueous dispersion is in the range of 1.3 to 1.35 g/cm³, and has a Ford cup flow time in the range of 10 to 13 seconds. This milled second aqueous dispersion can be used as engobe 100.

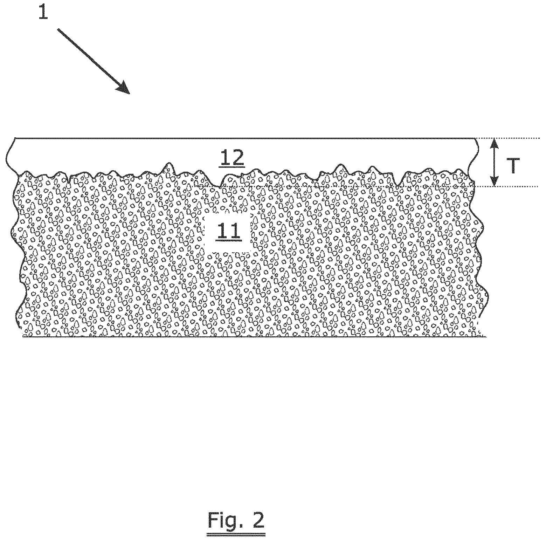

A dried clay tile 28 is provided with a layer of 0.02 to 0.03 g/m² of said engobe 100 in step 170. The clay tile with the engobe is fired (at less than 1100°C, typically at about 1030°C) in step 180 and after firing a sintered coating layer 12 with maximum thickness T of 25 µm is obtained on a fired clay bode 11 of a tile 1 as shown in figure 2.

A second embodiment of a method according to the present invention can also be described using figure 1 as reference.

Again, in a first step 100, a clay 20 type Baranòw clay is provided.

In a second step 110, water 21 is added to this clay such that a density of 1.65 g/cm³ is reached. Further additives 22 as set out in table III under are added to the dispersion.

**Table III**

| product | %w° |
|---|---|
| Baranòw clay | 15.40 |
| T 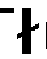 umaczòw melaphyre | 41.66 |
| Pigment 110 | 2.88 |
| CMC | 0.18 |
| Reotan LA | 0.30 |
| water | 39.5 |

| | |
|---|---|
| ° based upon total weight of the first dispersion Pigment 110 is Czerwień żelazowa 110, obtainable from Zwukso, Poland; Reotan LA is obtainable from Lamberti Plska, Poland | |

In a third step 120, the first aqueous dispersion is milled in a first milling step similar as set out with regard to the firs embodiment above.

The aqueous dispersion is milled until less than 0.25%w of the dry mass of the aqueous dispersion is retained by a sieve with finesse of 40µm.
The same milling apparatus as in embodiment 1 is used.

In a next step 130, additional water 23 is added to the aqueous dispersion, until the density of the diluted aqueous dispersion is in the range of 1.32 and 1.35 g/cm³.

The diluted aqueous dispersion is now separated in a first part 25 and a second part 26 in step 140. To separate these fractions, a centrifugation step is applied.
The same centrifuge as in embodiment 1 is used.

The first part 25, i.e. the part with the lighter weight particles, is the second aqueous dispersion having a density in the range of 1.10 to 1.15 g/cm³. This part will be used for the provision of an engobe according to the invention. The solids of this first part have a BET specific surface in the range of 33 to 37 m²/g, and 90 to 95%w (expressed as %w over the total dry mass of the second dispersion)has a particle size of less than 1µm.

In step 150, frit 27 is added as set out in table IV.

**Table IV**

| product | %w° |
|---|---|
| First part 25 | 88.30 |
| Frit FX300 | 11.70 |

| | |
|---|---|
| ° based upon total weight of the second dispersion | |

In the next step 160, the second aqueous dispersion is now milled in a second milling step by means of the same milling apparatus as set out in view of embodiment 1

The second aqueous dispersion is milled until less than 1%w of the dry mass of the second aqueous dispersion is retained by a sieve with finesse of 40µm.

The density of the milled second aqueous dispersion is in the range of 1.3 to 1.35 g/cm³, and has a Ford cup flow time in the range of 10 to 13 seconds. This milled second aqueous dispersion can be used as engobe 100.

A dried clay tile 28 is provided with a layer of 0.02 to 0.03 g/m² of said engobe 100 in step 170. The clay tile with the engobe is fired (at less than 1100°C, typically at about 1030°C) in step 180 and after firing a sintered coating layer 12 with maximum thickness T of 25 µm is obtained on a fired clay bode 11 of a tile 1.

It is to be understood that although preferred embodiments and/or materials have been discussed for providing embodiments according to the present invention, various modifications or changes may be made without departing from the scope and spirit of this invention.

## Claims

1. An engobe for coating clay tiles, comprising an aqueous dispersion of clay particles, wherein at least 95%w of said solid particles has a particle size of less than 40 µm, these solid particles having a BET specific surface in the range of 20 to 50 m²/g.

2. An engobe for coating a clay tile, wherein at least 99%w of said solid particles has a particle size of less than 40 µm.

3. An engobe according to any of the preceding claims, wherein said engobe comprise from 100 to 10 %w of clay.

4. An engobe according to any of the preceding claims, wherein said engobe further comprises 0 to 90 %w of feldspar.

5. An engobe according to any of the preceding claims, wherein said engobe further comprises 0 to 90 %w of frit.

6. An engobe according to any one of the preceding claims, wherein said engobe further comprises 0.1 to 40 %w of pigments.

7. An engobe according to any one of the preceding claims, wherein the engobe has a density in the range of 1.01 to 1.7 g/cm³.

8. A method to provide an engobe suitable for coating a clay tile, said method comprises the subsequent steps of
• Providing solid particles comprising a clay and optionally one or more other solid particles selected from the group consisting of pigment, frit and feldspar;
• Adding water to said solid particles to provide a first aqueous dispersion having a density in the range of 1.25 to 2.0 g/cm³;
• Milling said first aqueous dispersion such that less than 5%w of the solid particles of said first aqueous dispersion is retained by a sieve with finesse of 40 µm;
• Adding water to said first aqueous dispersion to provide a diluted first aqueous dispersion with density in the range of 1.2 to 1.7 g/cm³Separate said diluted first aqueous dispersion in a first and a second part, wherein the first part is a second aqueous dispersion having a density in the range of 1.01 to 1.5 g/cm³, less than 5%w of this second aqueous dispersion is retained by a sieve with finesse of 40 µm, the solid particles in said second aqueous dispersion have a BET specific surface in the range of 20 to 50 m²/g , this second aqueous dispersion providing the engobe.

9. A method according to claim 8, wherein pigments are present in the first aqueous dispersion.

10. A method according to any one of the claims 8 to 9, wherein feldspar is present in the first aqueous dispersion.

11. A method according to any one of the claims 8 to 10, said method further comprises the subsequent steps of
• Add solid particles selected from the group consisting of frit, feldspar and pigments to said second aqueous dispersion;
• Milling said second aqueous dispersion such that less than 5%w of the solid particles of said second aqueous dispersion is retained by a sieve with finesse of 40 µm,
this milled second aqueous dispersion providing the engobe.

12. A method according to claim 11, wherein pigments are added to the second aqueous dispersion.

13. A method according to any one of the claims 11 to 12, wherein frit is added to the second aqueous dispersion.

14. A method according to any one of the claims 8 to 13, wherein said separation step is done by centrifugation.

15. The use of an engobe according to any one of the claims 1 to 7, or obtainable by a method according to any one of the claims 8 to 14, for producing clay tiles, wherein an unfired clay tile is provided with a layer of said engobe, after which the coated clay tile is fired.

16. The use according to claim 15, wherein the engobe is applied to the unfired clay tile in an amount of 0.015 to 0.04 g/m².

17. A clay tile comprising an engobe layer according to any one of the claims 1 to 7 or an engobe obtainable according to any one of the claims 8 to 14.

18. A clay tile according to claim 17, said engobe layer having a maximum thickness of 40 µm or less.
